# EUROPEAN PATENT APPLICATION

(11) **EP 4 393 881 A1**
(43) Date of publication of application: **03.07.2024**
(21) Application number: 22859721.7
(22) Date of filing: 26.08.2022
(51) Int. Cl.: C01G 35/00, B02C 7/00, B22F 9/04, B82Y 40/00

(54) **TANTALUM NANOPARTICLE PREPARATION, METHOD FOR PRODUCING TANTALUM NANOPARTICLES AND USE OF THE TANTALUM NANOPARTICLE PREPARATION**

(30) Priority: 27.08.2021 BR 102021017032
(71) Applicant: Instituto Hercílio Randon, 95181899 Caixas do Sul (BR)
(72) Inventor: BOARETTO, Joel, 95032-180 Caxias do Sul (BR); CRUZ, Robinson Carlos Dudley, 95020-472 Caxias do Sul (BR)
(74) Representative: Grünecker Patent- und Rechtsanwälte PartG mbB
(86) International application number: PCT/BR2022/050337
(87) International publication number: WO 2023/023836

(57) **Abstract**

The present invention is in the field of materials engineering and nanotechnology. More specifically, the invention describes a preparation of tantalum nanoparticles, its use, and a process for obtaining it by comminution, that is, a top-down process. The nanoparticle preparation of the invention solves these and other problems and has a composition, purity, defined particle granulometric profile and high specific surface area, making it useful in a variety of applications. The invention also discloses a process for obtaining nanoparticles from mineral species containing Tantalum through controlled comminution and without chemical reactions or contamination with reagents typical of nanoparticle synthesis. The present invention, in wide contrast to the prior art, provides the large-scale obtaining of tantalum pentoxide nanoparticles with high purity, determined granulometric size profile and very high specific surface area, making their use practically viable in various industrial applications.

## Description

### Field of the Invention

The present invention is in the field of materials engineering and nanotechnology. More specifically, the invention describes a preparation of tantalum nanoparticles, its use, and a process for obtaining it by comminution, that is, a top-down process. The nanoparticle preparation of the invention solves these and other problems and has a defined composition, purity, particle granulometric profile and high specific surface area, making it useful in a variety of applications. The invention also discloses a process for obtaining nanoparticles from mineral species containing Tantalum, through controlled comminution and without chemical reactions or contamination with reagents typical of nanoparticle synthesis. The present invention, in wide contrast to the prior art, provides the large-scale obtaining of tantalum pentoxide nanoparticles with high purity, determined particle size profile and very high specific surface area, making their use practically viable in various industrial applications.

### Background of the Invention

Particles of various materials, and in particular particles of ceramic materials, including ceramic oxides, are of great use in a variety of applications. In this segment, the so-called Powder Metallurgy has been the object of study by many research groups and companies involved in the development of special materials, with the size limit or particle granulometric distribution profile being a key factor in the properties of such materials.

Of special relevance in the context of the present invention, it is stood out the difference between: (i) preparations containing a fraction of nanoparticles among the other particles; (ii) preparations containing particles predominantly or entirely in the nanometer particle granulometric range; and (iii) nanoparticle preparations predominantly or entirely in the nanometer particle granulometric range with a defined particle granulometric distribution profile. The present invention provides the latter two.

In this context, recent literature from one of the present inventors (Powder Technology 383 (2021) 348-355 - Powder grinding and nano-particle sizing: sound, light, and enlightenment) shows how important it is to know about the techniques for measuring the size of particles for a correct statement about such magnitude, particularly in the nano dimension. In the nano dimension, conventional measurement processes (EAS, electro acoustic spectroscopy and DLS dynamic light scattering) are susceptible to errors when based on the volume of particles, techniques based on the number of particles and also based on their specific surface area are the most appropriate in this dimension.

Tantalum particle preparations may even contain small fractions of nanoparticles, but the predominance of much larger particles, in the micrometer/micron range, prevents the characterization of such preparations as real nanoparticle preparations. Furthermore, it is known that the behavior of materials at the nanoscale changes substantially and therefore, the availability on a large scale and with high purity of a preparation that contains tantalum particles predominantly or entirely in the nanometer range and with high purity is highly desirable, without contamination typical of synthesis processes. The present invention solves these and other technical problems.

Ceramic oxides and in particular tantalum pentoxide have been considered in various applications due to the peculiar properties of tantalum.

The literature includes examples of synthesis methods for nanoparticles containing tantalum, in processes called bottom-up. However, being bottom-up or synthesis methods, such processes involve chemical reactions, reagents, and products, so that the product obtained normally contains a lot of contamination with residues of inputs or reaction byproducts.

Furthermore, nanoparticles obtained by bottom-up processes are limited to certain chemical species which are reaction products. Furthermore, these processes are not technically and/or economically viable on large scales, which are some of the reasons why no preparation of tantalum nanoparticles, that is stable, pure and with a particle granulometric distribution predominantly or entirely in the nanometer range, are available in an industrial scale. The present invention solves these and other technical problems.

The milling/comminution/pulverization methods of transition metals usually aim to increase the specific surface area and enable varied industrial uses. In the case of tantalum or materials containing tantalum, especially in the case of tantalum pentoxide, the known methods are limited to obtaining particles with particle granulometric in the micrometer range, not being known to the present inventors until the date of filing of this patent application of milling methods providing preparations entirely containing nanoparticles.

Tantalum has a higher dielectric constant than some other transition metals, which makes it a very useful material in electronic components, such as capacitors, for example. However, until the present invention, obtaining predominantly or entirely nanometric particles of tantalum and tantalum pentoxide by milling (top-down process) was a challenge considered technically impossible, having been the object of unsuccessful attempts. The present invention solves these and other technical problems.

In the search for the prior art in scientific and patent literature, the following documents were found that relate to the topic:
Brazilian patent application PI 0401882-6, filed by CBMM and archived, discloses a process for producing metallic niobium and tantalum powders of high chemical purity, high surface area, adequate morphology and porosity, and low density bulk. Said process comprises the steps of: obtaining fine powder; controlled surface oxidation; reducing this oxide layer with alkali or alkaline earth metals in a bath of molten salts, or inside a mixture of molten salts; dissolution and leaching of the formed cake; filtering, washing, and drying the product obtained. It does not disclose a preparation of tantalum pentoxide nanoparticles as the present invention.

The document Jamkhande et al. (2019) provides a general review on metal nanoparticle preparation methods. Among other techniques, the document Jamkhande et al. (2019) cites top-down approaches with mechanical fragmentation of particles, which can be carried out in mills containing spheres. Jamkhande et al. (2019) also mentions low-energy and high-energy milling. Jamkhande et al. (2019) does not discloses specific parameters of the processes mentioned, merely reviewing existing techniques. Even it does not disclose a preparation of tantalum pentoxide nanoparticles.

CN112456556 discloses tantalum oxide nanospheres with particle size in the range of 300-400 nm in diameter, uniform granularity, and good dispersion. However, CN112456556 addresses a "bottom-up" process which is opposite to the process defined in the present patent application and, additionally, CN112456556 does not disclose a preparation of tantalum pentoxide nanoparticles as defined in the present invention.

Brazilian patent application BR 112020014972-1 (=WO2019145298), filed by Evonik Operations GMBH, discloses compositions of polymeric inorganic nanoparticles and processes for preparing them. The nanoparticles disclosed in the aforementioned document are made of a metal chalcogenide containing Sulphur, Selenium, Tellurium or Oxygen and a polymer selected from a variety of polymer species, including acrylates, acids, halides, or esters, and are intended for use as a lubricant. It does not disclose a tantalum pentoxide nanoparticle preparation as the present invention.

The US patent application US2007185242A1, filed by Huang Yuhong and abandoned, discloses a low-temperature curing ink comprising nanosized metal hydroxide. The focus of said document is the composition for coating an electrode or capacitor. The composition comprises sub-micrometric particles obtained by a mechanical-chemical process, using ruthenium hydroxide nanoparticles. In said document, metal hydroxide nanoparticles are manufactured by reacting a metal chloride with sodium hydroxide in water. It does not disclose a tantalum pentoxide nanoparticle preparation as the present invention.

US patent application US2020391294, filed by the University of Missouri, discloses a process for preparing a powdered metal-ceramic material composite. In said process, a mill is used wherein a metallic powder is comminuted together with ceramic nanoparticles to generate a metal-ceramic composite. The balls of the mill and its interior are made of ceramic. It does not disclose a tantalum pentoxide nanoparticle preparation as the present invention.

From what can be seen from the researched literature, no documents were found anticipating or suggesting the teachings of the present invention.

### Summary of the Invention

The present invention solves several prior art problems related to tantalum preparations with predominantly or entirely nanometric particle sizes.

It is one of the objects of the invention to provide a preparation of tantalum nanoparticles with high purity.

It is one of the objects of the invention to provide a preparation of tantalum particles of chemically defined composition.

It is one of the objects of the invention to provide a preparation of tantalum pentoxide particles with d50 to d99 in the particle granulometric range of nanometers.

It is one of the objects of the invention to provide a preparation of tantalum pentoxide particles with d90 to d99 in the particle granulometric range of nanometers.

It is one of the objects of the invention to provide a preparation of tantalum particles in the particle size range below 100 nanometers.

The nanoparticle preparation of the invention is useful in several applications, including: modulating or improving the mechanical properties of steels, metallic and non-metallic alloys, ceramics and/or polymers; the doping of materials to modulate electromagnetic properties for use in electronic components, battery cells, energy storage systems, solar panels, sensors and piezoelectric actuators; the modulation of optical properties of glass or other transparent or translucent materials; the use as a component of catalysts; in the preparation of stable liquid/colloidal compositions.

It is another object of the invention to provide a process for preparing a preparation of tantalum nanoparticles by a top-down approach, that is, by comminution without chemical or mechanical-chemical synthesis. Said process has a large scale and is suitable for economic viability and effective availability of preparations.

In one embodiment, the process of obtaining tantalum nanoparticles comprises the steps of:
- feeding tantalum particles to comminuting equipment selected from: high energy mill, steam mill and jet mill;
- adjusting the comminution conditions selected from:
   - in a high energy mill:
      - suspending particles to be comminuted in a liquid, in a concentration between 1 and 90% m/m, and stabilizing the suspension until obtaining a stable colloidal suspension; and
      - placing said suspension and milling balls with a selected diameter between 5 µm and 1.3 mm in the milling chamber; adjusting the mill rotation speed between 500 and 4500 rpm; and mill the particles at temperatures below 60°C; or
      - in a jet mill with superheated fluid or steam mill, feeding particles smaller than 40 micrometers; adjusting the air classifier rotation between 1,000 and 25,000 rpm; adjusting the compressed steam pressure between 10 and 100 bar and temperature between 230 and 360°C; or
      - in a jet mill, adjusting the air classifier rotation between 1,000 and 25,000 rpm, adjusting the compressed air pressure between 1 and 50 bar and a temperature lower than 40 °C;
      - comminuting the particles until the desired particle granulometric profile is obtained.

In one embodiment, the stabilization of the colloidal suspension to be placed in the mlling chamber of the high-energy mill referred to above is selected from: adjusting the pH of the polar liquid medium to the range between 2 to 13, and optionally adding surfactants; or the addition of surfactants in a non-polar liquid medium.

In one embodiment, the process of obtaining tantalum nanoparticles includes milling in a high-energy mill operating with spheres of special materials, such as zirconia, zirconia stabilized with yttria, zirconia stabilized with niobium pentoxide, or combinations thereof, by adjusting the specific parameters.

In another embodiment, the process for obtaining tantalum nanoparticles includes milling in a jet mill with superheated steam, superheated steam, or steam mill, by adjusting specific parameters.

These and other objects of the invention will be immediately appreciated by those skilled in the art and will be described in detail below.

### Brief Description of the Figures

The following figures are presented:
Fig. 1 shows the particle size distribution of an embodiment of the tantalum pentoxide nanoparticle preparation of the invention, showing the particle size profile obtained on an electroacoustic spectrometer model DT1202 from Dispersion Technology Inc. It was shown: the particle granulometric distribution or equivalent diameter on the volumetric basis of particle in micrometers (horizontal axis), relative fraction of nanoparticles (vertical axis on the left) and cumulative fraction (vertical axis on the right).
Fig. 2 shows cumulative particle size distributions (DTP) obtained by electroacoustic spectrometry for Ta₂O₅ milled for 12 hours.
Fig. 3 shows differential particle size distributions (DTP) obtained by electroacoustic spectrometry for Ta₂O₅ ground for 12 hours.
Fig. 4 shows a brightfield TEM image at 20,000X magnification showing tantalum nanoparticles from sample 1 (Ta 12h - raw).
Fig. 5 shows images called A, B and C from brightfield TEM with 100,000X magnification showing tantalum nanoparticles from sample 1 (Ta 12h - raw).
Fig. 6 shows images called A, B and C from brightfield TEM with 200,000X magnification showing tantalum nanoparticles from sample 1 (Ta 12h - raw).
Fig. 7 shows brightfield TEM images with 100,000X magnification showing tantalum nanoparticles from sample 1 (Ta 12h - raw) and, respectively next to each image, another image that illustrates the identification, counting and measurement process.
Fig. 8 shows a histogram resulting from the morphological analysis that illustrates the distribution of particle sizes of sample 1 (Ta 12h - raw).
Fig. 9 shows a brightfield TEM image at 20,000X magnification showing tantalum nanoparticles from sample 2 (Ta 12h - Centrifuged Supernatant).
Fig. 10 shows images called A, B and C from brightfield TEM with 100,000X magnification showing tantalum nanoparticles from sample 2 (Ta 12h - Centrifuged Supernatant).
Fig. 11 shows images called A, B and C from brightfield TEM with 200,000X magnification showing tantalum nanoparticles from sample 2 (Ta 12h - Centrifuged Supernatant).
Fig. 12 shows brightfield TEM images with 100,000X magnification showing tantalum nanoparticles from sample 2 (Ta 12h - Centrifuged Supernatant) and, respectively alongside each image, another image that illustrates the process of identification, counting and measurement.
Fig. 13 shows a histogram resulting from the morphological analysis that illustrates the distribution of particle sizes of sample 2 (Ta 12h - Centrifuged Supernatant).

### Detailed Description of the Invention

The present invention solves several prior art problems and provides a preparation of tantalum nanoparticles that concomitantly contemplates the following technical characteristics: particles predominantly or entirely in the nanometer particle size range; high purity; an industrial-scale process that enables supply and use on an economic scale. Said preparation can also be called tantalum nanoparticle preparation.

In the present invention, the term "tantalum particles" encompasses various chemical entities containing tantalum, including metallic tantalum, oxides, hydrates, hydrides, carbides, or nitrides of tantalum, iron tantalum or tantalum alloyed with other metals or transition metals, or combinations of the same. It also includes tantalum pentoxide.

The invention is also defined by the following clauses.

Preparation of tantalum nanoparticles comprising a content equal to or greater than 95% weight of tantalum particles, wherein 50% to 90% particles (d50 to d90) are in the particle size range of 342 to 2127 nanometers (nm).

Nanoparticle preparation described above wherein 90% to 99% particles (d90 to d99) are in the particle size range of 1402 to 9938 nanometers (nm).

Nanoparticle preparation described above wherein said particles have a size in the range of 10 to 492 nanometers (nm). In one embodiment, said nanoparticles have an average size of 89.5 nm.

Nanoparticle preparation described above wherein said particles have a size in the range of 10 to 339 nanometers (nm). In one embodiment, said nanoparticles have an average size of 79.44 nm.

Nanoparticle preparation described above wherein said particles have a size in the range of 10 to 9938 nanometers (nm).

Nanoparticle preparation described above comprising a content equal to or greater than 99% weight of tantalum particles.

Nanoparticle preparation described above wherein the nanoparticles are tantalum pentoxide.

Nanoparticle preparation described above wherein the particle size distribution is: d10 between 83 and 97 nm; d50 between 342 and 455 nm; d90 between 1402 and 2127 nm; or d99 between 5755 and 9938 nm. In one embodiment, the particle size distribution is such that d10 is 89 nm. In one embodiment, the particle size distribution is such that d50 is 391 nm. In one embodiment, the particle size distribution is such that d90 is 1720 nm. In one embodiment, the particle size distribution is such that d99 is 7580 nm.

Nanoparticle preparation described above wherein the particle specific surface area is: d10 between 7.54 and 8.82 m².g⁻¹; d50 between 1.61 and 2.14 m².g⁻¹; d90 between 0.34 and 0.52 m².g⁻¹; or d99 between 0.07 and 0.13 m².g⁻¹. In one embodiment, the particle specific surface area is such that d10 is 8.22 m².g⁻¹. In one embodiment, the particle specific surface area is such that d50 is 1.87 m².g⁻¹. In one embodiment, the specific surface area distribution is such that d90 is 0.43 m².g⁻¹. In one embodiment, the particle specific surface area is such that d99 is 0.10 m².g⁻¹.

Use of the nanoparticle preparation described above to adjust the rheological properties of other particle or nanoparticle preparations, adjust degrees of packing, fluidity, void fractions, or other properties of the final preparation.

Use of the nanoparticle preparation described above for the preparation of: stable colloidal compositions; steels, metallic and non-metallic alloys, ceramics and/or polymers; electronic components, battery cells, energy storage systems, piezoelectric sensors and actuators, solar panels; glass, glass-ceramic or other transparent and translucent materials; catalysts.

Process for obtaining tantalum nanoparticles comprising the steps of:
- feeding tantalum particles to comminuting equipment selected from: high-energy mill, steam mill and jet mill;
- adjusting the comminution conditions selected from:
   - in a high-energy mill:
      - suspending particles to be comminuted in a liquid, in a concentration between 1 and 90% m/m, and stabilizing the suspension until obtaining a stable colloidal suspension; and
      - placing said suspension and milling balls with a selected diameter between 5 µm and 1.3 mm in the milling chamber; adjusting the mill rotation speed between 500 and 4500 rpm; and mill the particles at temperatures below 60°C; or
      - in a jet mill with superheated fluid or steam mill, feeding particles smaller than 40 micrometers; adjusting the air classifier rotation between 1,000 and 25,000 rpm; adjusting the compressed steam pressure between 10 and 100 bar and temperature between 230 and 360°C; or
      - in a jet mill, adjusting the air classifier rotation between 1,000 and 25,000 rpm, adjusting the compressed air pressure between 1 and 50 bar and a temperature lower than 40 °C;
      - comminuting the particles until the desired particle granulometric profile is obtained.

Process as described above wherein the stabilization of the colloidal suspension to be placed in the milling chamber of the high-energy mill is selected from: adjusting the pH of the polar liquid medium to the range between 2 to 13, and optionally adding surfactants; or the addition of surfactants in a non-polar liquid medium.

Process as described above additionally comprising a pre-comminution step of the tantalum particles before the feeding step to the comminution equipment, said pre-comminution being conducted until reaching an average particle size between 1 and 40 micrometers.

Process wherein the said pre-comminution is carried out in a ball mill, disc mill or high-energy mill.

Process wherein the said pre-comminution is carried out in a jet mill.

Process as described above wherein the high-energy mill is of the agitated media type and said spheres are selected from: zirconia, silicon carbide, alumina, said spheres being optionally stabilized with yttria or niobium pentoxide, or combinations thereof.

Process as described above wherein the operating pH in the mill is 6 to 10.

Process as described above wherein the operating temperature in the mill is 30 to 40°C.

Process as described above comprising step in a jet mill with superheated fluid or steam mill, with adjustment of the air classifier rotation between 1,000 and 25,000 rpm, preferably between 5,000 and 25,000 rpm, more preferably between 10,000 and 25,000 rpm, even more preferably between 15,000 and 25,000 rpm, even more preferably between 20,000 and 25,000 rpm; adjusting the pressure of the compressed steam between 10 and 100 bar, preferably between 20 and 90 bar, more preferably between 30 and 80 bar, even more preferably between 40 and 70 bar, even more preferably between 45 and 60 bar; and temperature between 230 and 360°C, preferably between 240 and 340°C, more preferably between 250 and 320°C, even more preferably between 260 and 300°C, even more preferably between 270 and 290°C.

Process as described above comprising a step in a jet mill, with adjustment of the air classifier rotation between 1,000 and 25,000 rpm, preferably between 5,000 and 25,000 rpm, more preferably between 10,000 and 25,000 rpm, even more preferably between 15,000 and 25,000 rpm, even more preferably between 20,000 and 25,000 rpm; adjusting the compressed air pressure between 1 and 50 bar, preferably between 1 and 40 bar, more preferably between 2 and 30 bar, even more preferably between 3 and 20 bar, even more preferably between 4 and 10 bar; and temperature less than 40°C.

In one embodiment, a preparation of tantalum pentoxide nanoparticles with purity equal to or greater than 99% is provided.

In one embodiment, the tantalum nanoparticle preparation of the present invention has particle sizes between 50 and 1000 nanometers. In some embodiments, the nanoparticle preparation of the invention comprises particles with defined particle granulometric fractions, for example a preparation with particles entirely between 50 and 800 nm, and preparations with particles at intermediate values and with particle size fractions of defined value.

In some embodiments of the present invention, as is already practice in the industry, the distribution of particle size fractions is defined by d10, d50, d90 and occasionally d99, notations that reflect the accumulated % volume of particles corresponding to each notation, d10 referring to at 10% of the particle volume, d50 at 50% of the volume and so on.

In some embodiments, the invention provides a preparation of tantalum particles in the particle size range below 100 nanometers.

The nanoparticle preparation of the invention is useful in several applications, including: the preparation of stable colloidal suspensions; the modulation or improvement of the mechanical properties of steels, metallic and non-metallic alloys, ceramics and/or polymers; the doping of materials to modulate electromagnetic properties for use in electronic components, battery cells, energy storage systems, solar panels, sensors and piezoelectric actuators; the modulation of optical properties of glass or other transparent materials; use as a component of catalysts.

In one embodiment, the use of the nanoparticle preparation of the invention provided the obtaining of stable liquid compositions or colloidal suspensions wherein the nanoparticles remain in suspension for a long time, providing a long shelf life.

The process for obtaining tantalum nanoparticles differs from other congeners because it is a top-down process, without chemical reactions or mechanical-chemistry. The fact that pure or high-purity tantalum particles are used for comminution provides the obtaining of high-purity nanoparticle preparations, since the process does not add impurities or lead to the formation of reaction products, as is the case in bottom-up processes, prior art synthesis or mechanical-chemicals.

In one embodiment, the process involves wet milliing in a high-energy mill and makes it possible on an industrial scale to obtain tantalum pentoxide particles predominantly or entirely in the nanometer particle granulometric range. In embodiments wherein comminution is carried out in high-energy wet mills, stabilization of the colloidal suspension to be placed in the milling chamber of the high-energy mill is a very important step, being selected from: adjusting the pH of the polar liquid medium for the range between 2 to 13, and optionally add surfactants; or the addition of surfactants in a non-polar liquid medium.

In one embodiment, a mill known in the art is used, for example a high-energy mill with zirconia spheres stabilized with yttria (ZrO₂ + Y₂O₃), by adjusting specific parameters, including rotation time, pH, and temperature. In one embodiment, the milling medium includes zirconia balls, ZTA (zirconia reinforced with alumina or yttrium) and alumina. Preferably, zirconia spheres stabilized with 5% w/w yttria are used.

In another embodiment, the process involves comminution by a jet mill with superheated steam (steam mill), to which particles smaller than 40 microns are fed, the rotation of the air classifier being adjusted between 1,000 and 25,000 rpm, the pressure of the compressed steam between 10 and 100 bar, and the temperature between 230 and 360°C.

### Examples

The examples shown herein are intended only to exemplify some of the various ways of carrying out the invention, however without limiting the scope thereof.

### Example 1 - Tantalum pentoxide wet milling process in high-energy mill

In this embodiment, the preparation of tantalum pentoxide nanoparticles was obtained by milling with adjustment of parameters including rotation speed, pH, temperature.

Tantalum pentoxide from a commercial source, with high purity and particle size distribution d90=70, d50=18 and d10=0.25 (µm) was fed to a high-energy mill of the agitated media type. Said mill operates with milling balls/spheres from 5 µm to 1.3 mm in diameter, made of zirconia stabilized with yttria. In this embodiment, the size of said balls was 400 µm. The milling conditions for said material, to obtain Tantalum pentoxide nanoparticle powder, included: rotation speeds between 1000 and 4500 rpm, temperatures below 40°C maintained with the aid of a forced cooling system external to said mill. After 30 to 120 minutes of operation under these conditions, a powder preparation containing tantalum nanoparticles was obtained.

Different milling conditions were tested to evaluate efficiency. Under the condition of milling time of 30 minutes, pH 9.0 with the size measurement technique by electroacoustic spectroscopy and on a volumetric basis, and temperature of 25°C, nanoparticles with d10 of 0.087 were obtained; d50 of 0.197; and d90 of 0.505 (87 nm, 197 nm, and 505 nm respectively).

### Example 2 - Particle size measurement

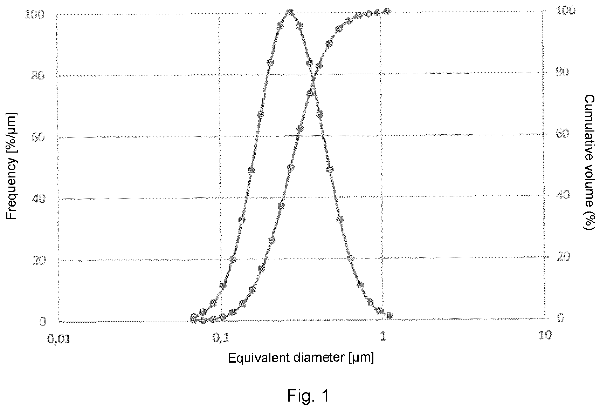

The particle size distribution was measured by the electroacoustic spectroscopy method, using the DT1202 brand Dispersion Technology Inc. As shown in Fig. 1, the tantalum nanoparticle preparation of the invention has a particle granulometric distribution entirely in the nanoparticle range. Fig. 1 shows the particle granulometric distribution or equivalent diameter of the particles in nanometers (horizontal axis), the relative fraction of nanoparticles (vertical axis on the left) and cumulative fraction (vertical axis on the right). Fig. 1 shows that the tantalum nanoparticles of this embodiment of the invention have an equivalent diameter between 60 and 1000 nanometers (nm), with 99% between 60 and 776 nm, 90% between 60 and 480 nm, 50% between 60 and 275 nm, 10% between 60 and 157 nm. Table 1 shows the average diameters obtained in each fraction:

**Table 1 - Average diameters in µm for different fractions**

| Diameters [µm] | |
|---|---|
| D10 | 0.157 |
| D50 | 0.275 |
| D90 | 0.480 |
| D99 | 0.776 |

### Example 3 - Stable colloidal suspension - Test of the stability of tantalum particles according to pH and in aqueous solution

The nanoparticle preparation obtained according to example 1 was used to obtain a stable colloidal suspension and pH-dependent stabilization tests were carried out. The stability of tantalum nanoparticles is dependent on the pH of the medium, and at pH levels between 3 and 5 the particles reach their greatest instability.

### Example 4 - Pre-comminution of Tantalum Pentoxide

Pre-comminution can be done with any conventional milling technique known to those skilled in the art (non-limiting examples: ball mill with micrometric balls (5-10 micrometers), disc mill, high-energy mill, or jet mill).

In the non-limiting example below, a jet mill was used to pre-comminute the Tantalum pentoxide particles, so that improve the performance of the subsequent comminution process until entirely particle granulometric distribution (d99) below 40 micrometers, preferably in the nanometer range.

Reducing the average particle size is particularly useful for improving the performance of the subsequent comminution process in a high-energy mill, as demonstrated in example 1.

The pre-comminution conditions tested on a jet mill are summarized in Table 2 below.

**Table 2 - Pre-comminution conditions in jet mill**

| **Tests** | **#** | **1** | **2** | **3** |
|---|---|---|---|---|
| Product | | 1 | 2 | 3 |
| Classifier Speed | rpm | 18,000 | 18,000 | 18,000 |
| Milling air pressure | bar(g) | 5.5 | 5.5 | 5.5 |
| Fan capacity | (%) | 30 | 20 | 22 |
| Inlet air temperature | °C | 28 | 27 | 28 |
| Quantity of starting material | kg | 5 | 5 | 5 |
| Test time | Min | 30 | 30 | 30 |
| Product flow | kg/h | 0.9 | 0.8 | 0.8 |
| Nozzle diameter | mm | 2.1 | 2.1 | 2.1 |
| Nozzle distance | mm | 80 | 80 | 80 |
| Classifier pressure | mbar(g) | 0.12 | 0.11 | 011 |
| Slot pressure | mbar(g) | 0.16 | 0.16 | 0.14 |
| Classifier current | A | 1.53 | 1.52 | 1.54 |
| Density bulk | g/L | 1.6 | 1.6 | 1.6 |
| Final humidity | % | 0.8 | 0.8 | 0.8 |
| Specific milling energy | kWh/kg | 1.66 | 1.87 | 1.87 |
| Specific air flow | m³/kg | 44.3 | 49.8 | 49.8 |
| Dosage | A/B | 1% low | 1% low | 1% low |

### Example 5 - Comminution of Tantalum Pentoxide by Steam mill

In this embodiment, Ta₂O₅ particles smaller than 40 micrometers were fed to a steam mill.

Then, the air classifier rotation was adjusted to 20,000 rpm and the compressed steam pressure was adjusted to 50 bar. The temperature of the superheated fluid was 280°C.

### Example 6 - Comminution of Tantalum Pentoxide by Jet mill

In this embodiment, jet mill was used to comminute Ta₂O₅ particles to particle size ranges wherein d99 was in the range of less than one micrometer. The comminution conditions tested in a jet mill are summarized in Table 3.

**Table 3 - Pre-comminution conditions in jet mill**

| **Tests** | **#** | **1** | **2** | **3** |
|---|---|---|---|---|
| Product | | 1 | 2 | 3 |
| Classifier speed | rpm | 18,000 | 18,000 | 18,000 |
| Milling air pressure | bar(g) | 5.5 | 5.5 | 5.5 |
| Fan capacity | (%) | 30 | 20 | 22 |
| Inlet air temperature | °C | 28 | 27 | 28 |
| Raw-material quantity | kg | 5 | 5 | 5 |
| Test time | Min | 30 | 30 | 30 |
| Product flow | kg/h | 0.9 | 0.8 | 0.8 |
| Nozzle diameter | mm | 2.1 | 2.1 | 2.1 |
| Nozzle distance | mm | 80 | 80 | 80 |
| Classifier pressure | mbar(g) | 0.12 | 0.11 | 0.11 |
| Slot pressure | mbar(g) | 0.16 | 0.16 | 0.14 |
| Classifier current | A | 1.53 | 1.52 | 1.54 |
| Density bulk | g/L | 1.6 | 1.6 | 1.6 |
| Final humidity | % | 0.8 | 0.8 | 0.8 |
| Specific milling energy | kWh/kg | 1.66 | 1.87 | 1.87 |
| Specific air flow | m³/kg | 44.3 | 49.8 | 49.8 |
| Dosage | A/B | 1% low | 1% low | 1% low |

### Example 7 - Measurement of particle size and surface area

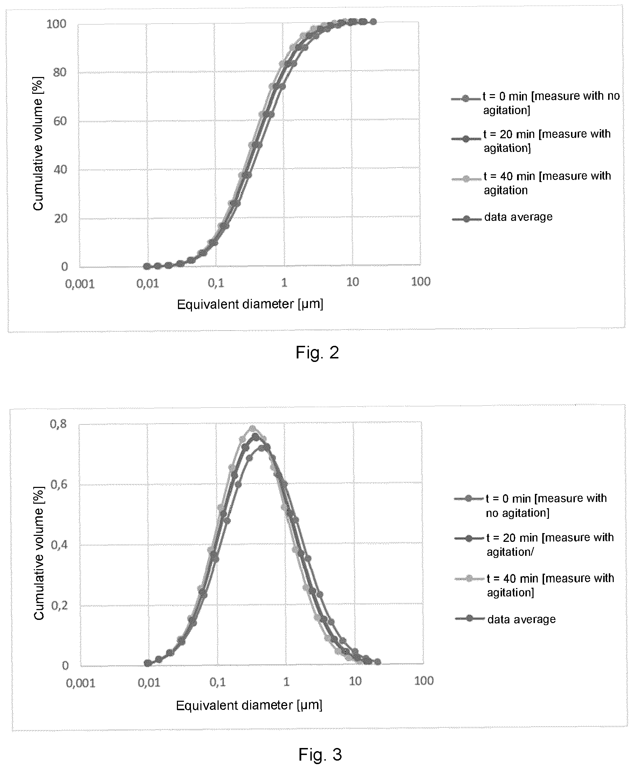

The suspension containing tantalum pentoxide (Ta₂O₅), supplied by NIONE Ltda after 12 hours of milling, was manually stirred with the aid of a glass stick and sonicated sequentially using an ultrasonic tip (Hielscher Ultrasonic, UP400S) operating with amplitude and impulse set at 70% for 10 minutes. Aliquots were collected and diluted to an adjusted solids content of 2% by mass. After preparation, the aliquots were used to determine particle size distributions (DTPs) in an electroacoustic spectrometer (Dispersion Technology Inc., DT1202). For the first measurement (t = 0 min), the analysis was conducted without the aid of mechanical stirring with the magnetic stir bar. Subsequent measurements were carried out with the aid of shaking. In Figs. 2 and 3 the cumulative and differential curves are compared, respectively, for the sample as received after 12 hours of milling.

**Table 4 - Equivalent diameters (µm) at different agitation application times.**

| Equivalent diameter (µm) | | | |
|---|---|---|---|
| t = 0 min | t = 20 min | t = 40 min | Average |
| 9.64E-03 | 9.69E-03 | 1.00E-02 | 9.78E-03 |
| 1.42E-02 | 1.40E-02 | 1.43E-02 | 1.41E-02 |
| 0.0208407 | 2.01E-02 | 2.03E-02 | 2.04E-02 |
| 3.06E-02 | 0.029053 | 2.89E-02 | 2.95E-02 |
| 4.51E-02 | 4.19E-02 | 4.11E-02 | 4.27E-02 |
| 6.62E-02 | 6.04E-02 | 0.0585013 | 6.17E-02 |
| 9.74E-02 | 8.71E-02 | 0.0832656 | 8.93E-02 |
| 0.1431881 | 0.1256583 | 0.1185129 | 1.29E-01 |
| 0.210526 | 0.1812137 | 0.1686808 | 1.87E-01 |
| 0.3095315 | 0.2613311 | 0.2400854 | 2.70E-01 |
| 0.4550967 | 0.3768697 | 0.3417163 | 3.91E-01 |
| 0.6691178 | 0.5434896 | 0.4863689 | 5.66E-01 |
| 0.9837879 | 0.7837747 | 0.6922547 | 8.20E-01 |
| 1.44644 | 1.130294 | 0.9852942 | 1.19E+00 |
| 2.126666 | 1.630014 | 1.402381 | 1.72E+00 |
| 3.126786 | 2.350668 | 1.996025 | 2.49E+00 |
| 4.597239 | 3.389935 | 2.840966 | 3.61E+00 |
| 6.759211 | 4.888678 | 4.043581 | 5.23E+00 |
| 9.937906 | 7.050038 | 5.755277 | 7.58E+00 |
| 14.61147 | 10.16697 | 8.191553 | 1.10E+01 |
| 21.48289 | 14.66194 | 11.65914 | 1.59E+01 |

**Table 5 - Frequency (%/pm) at different agitation application times.**

| Frequency (%/µm) | | | |
|---|---|---|---|
| t = 0 min | t = 20 min | t = 40 min | Average |
| 7.94E-03 | 8.36E-03 | 8.67E-03 | 8.33E-03 |
| 0.018676 | 0.019662 | 0.020393 | 1.96E-02 |
| 0.040134 | 0.042254 | 0.043825 | 4.21E-02 |
| 0.078824 | 0.082988 | 0.086074 | 8.26E-02 |
| 0.141489 | 0.148963 | 0.154501 | 1.48E-01 |
| 0.232112 | 0.244373 | 0.253459 | 2.43E-01 |
| 0.348006 | 0.366389 | 0.380012 | 3.65E-01 |
| 0.476859 | 0.502048 | 0.520715 | 5.00E-01 |
| 0.597181 | 0.628726 | 0.652103 | 6.26E-01 |
| 0.683496 | 0.7196 | 0.746356 | 7.16E-01 |
| 0.714955 | 0.752721 | 0.780709 | 7.49E-01 |
| 0.683495 | 0.7196 | 0.746356 | 7.16E-01 |
| 0.597181 | 0.628726 | 0.652103 | 6.26E-01 |
| 0.476858 | 0.502048 | 0.520715 | 5.00E-01 |
| 0.348006 | 0.366389 | 0.380012 | 3.65E-01 |
| 0.232112 | 0.244373 | 0.253459 | 2.43E-01 |
| 0.141489 | 0.148963 | 0.154501 | 1.48E-01 |
| 0.078824 | 0.082988 | 0.086074 | 8.26E-02 |
| 0.040134 | 0.042254 | 0.043825 | 4.21E-02 |
| 0.018676 | 0.019662 | 0.020393 | 1.96E-02 |
| 0.007942 | 0.008362 | 0.008673 | 8.33E-03 |

**Table 6 - Cumulative volume at different agitation application times.**

| Cumulative volume | | | |
|---|---|---|---|
| t = 0 min | t = 20 min | t = 40 min | Average |
| 0.000416 | 0.000416 | 0.000416 | 0.000416 |
| 0.001706 | 0.001706 | 0.001706 | 0.001706 |
| 0.004921 | 0.004921 | 0.004921 | 0.004921 |
| 0.01216 | 0.01216 | 0.01216 | 0.01216 |
| 0.026895 | 0.026895 | 0.026895 | 0.026895 |
| 0.053996 | 0.053996 | 0.053996 | 0.053996 |
| 0.09905 | 0.09905 | 0.09905 | 0.09905 |
| 0.166743 | 0.166743 | 0.166743 | 0.166743 |
| 0.258663 | 0.258663 | 0.258663 | 0.258663 |
| 0.371475 | 0.371475 | 0.371475 | 0.371475 |
| 0.496605 | 0.496605 | 0.496605 | 0.496605 |
| 0.622048 | 0.622048 | 0.622048 | 0.622048 |
| 0.735704 | 0.735704 | 0.735704 | 0.735704 |
| 0.828774 | 0.828774 | 0.828774 | 0.828774 |
| 0.897654 | 0.897654 | 0.897654 | 0.897654 |
| 0.943726 | 0.943726 | 0.943726 | 0.943726 |
| 0.971578 | 0.971578 | 0.971578 | 0.971578 |
| 0.986795 | 0.986795 | 0.986795 | 0.986795 |
| 0.994308 | 0.994308 | 0.994308 | 0.994308 |
| 0.997661 | 0.997661 | 0.997661 | 0.997661 |
| 0.999013 | 0.999013 | 0.999013 | 0.999013 |

**Table 7 - Cumulative volume (%) at different agitation application times.**

| Cumulative volume (%) | | | |
|---|---|---|---|
| t = 0 min | t = 20 min | t = 40 min | Average |
| 0.0416 | 0.0416 | 0.0416 | 0.0416 |
| 0.1706 | 0.1706 | 0.1706 | 0.1706 |
| 0.4921 | 0.4921 | 0.4921 | 0.4921 |
| 1.216 | 1.216 | 1.216 | 1.216 |
| 2.6895 | 2.6895 | 2.6895 | 2.6895 |
| 5.3996 | 5.3996 | 5.3996 | 5.3996 |
| 9.905 | 9.905 | 9.905 | 9.905 |
| 16.6743 | 16.6743 | 16.6743 | 16.6743 |
| 25.8663 | 25.8663 | 25.8663 | 25.8663 |
| 37.1475 | 37.1475 | 37.1475 | 37.1475 |
| 49.6605 | 49.6605 | 49.6605 | 49.6605 |
| 62.2048 | 62.2048 | 62.2048 | 62.2048 |
| 73.5704 | 73.5704 | 73.5704 | 73.5704 |
| 82.8774 | 82.8774 | 82.8774 | 82.8774 |
| 89.7654 | 89.7654 | 89.7654 | 89.7654 |
| 94.3726 | 94.3726 | 94.3726 | 94.3726 |
| 97.1578 | 97.1578 | 97.1578 | 97.1578 |
| 98.6795 | 98.6795 | 98.6795 | 98.6795 |
| 99.4308 | 99.4308 | 99.4308 | 99.4308 |
| 99.7661 | 99.7661 | 99.7661 | 99.7661 |
| 99.9013 | 99.9013 | 99.9013 | 99.9013 |

The summary of the DTP results and the specific surface areas calculated for each particle granulometric profile are presented in Tables 2 and 3, respectively.

**Table 8. Summary of DTP results [µm]**

| | t (min) | | | Average |
|---|---|---|---|---|
| | 0 | 20 | 40 | |
| D10 | 0.097 | 0.087 | 0.083 | 0.089 |
| D50 | 0.455 | 0.377 | 0.342 | 0.391 |
| D90 | 2.127 | 1.630 | 1.402 | 1.720 |
| D99 | 9.938 | 7.050 | 5.755 | 7.580 |

**Table 9. Specific surface area [m².g⁻¹]**

| | t (min) | | | Average |
|---|---|---|---|---|
| | 0 | 20 | 40 | |
| D10 | 7.54 | 8.41 | 8.82 | 8.22 |
| D50 | 1.61 | 1.94 | 2.14 | 1.87 |
| D90 | 0.34 | 0.45 | 0.52 | 0.43 |
| D99 | 0.07 | 0.10 | 0.13 | 0.10 |

### Example 8 - Morphological, structural, and statistical analysis of particles using transmission electron microscopy (TEM)

The samples analyzed are suspensions containing tantalum oxide nanoparticles that were subjected to a 12-hour period of milling, sample 1 being the homogeneous crude suspension and sample 2 being the supernatant resulting from separation by centrifugation.

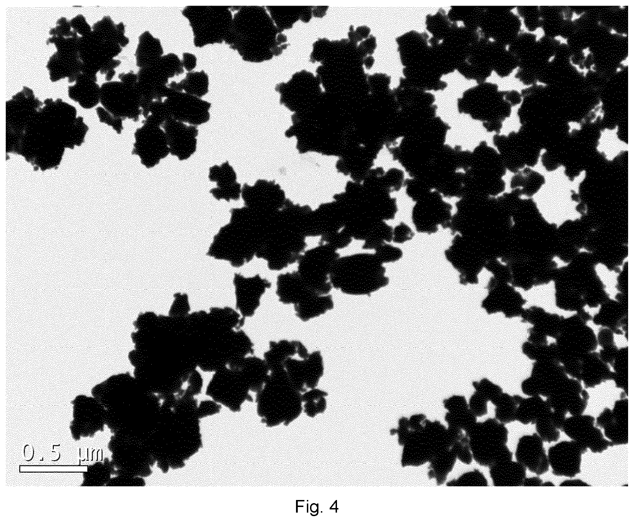

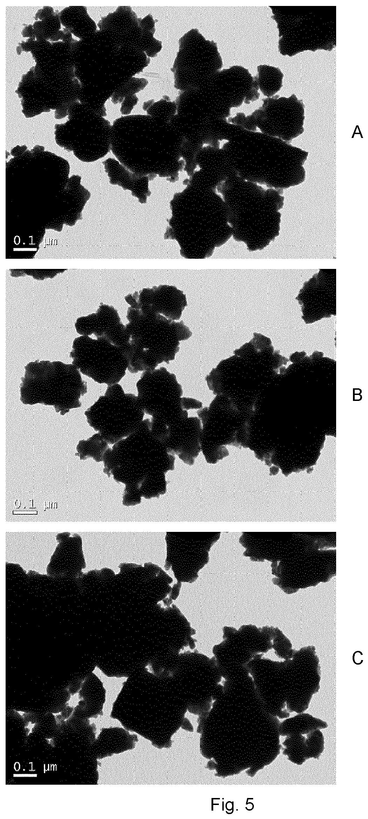

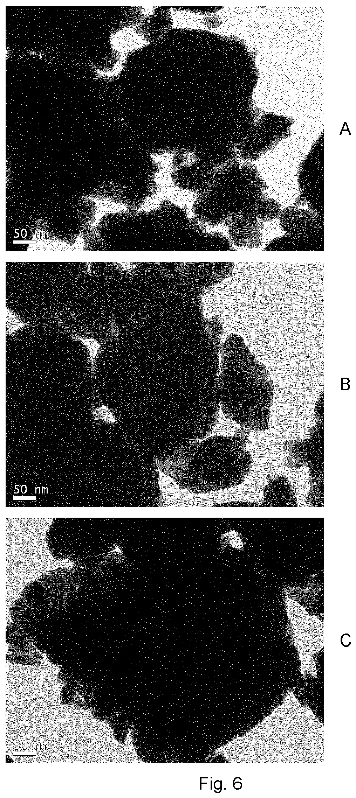

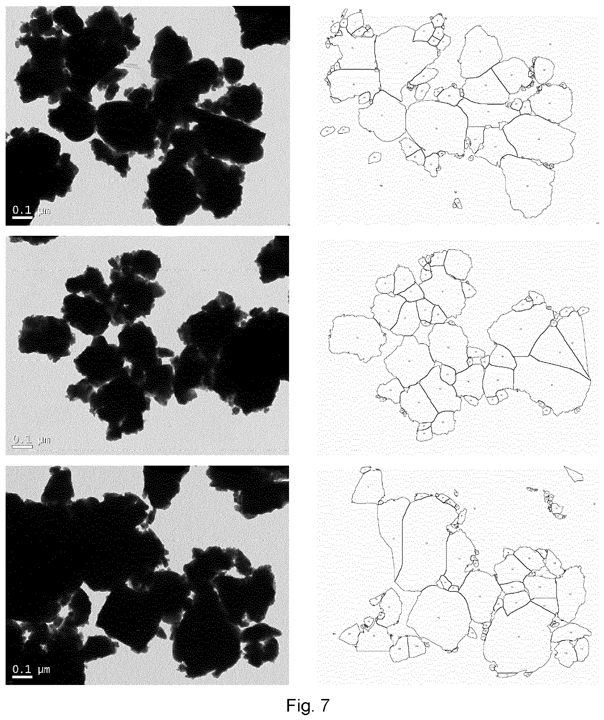

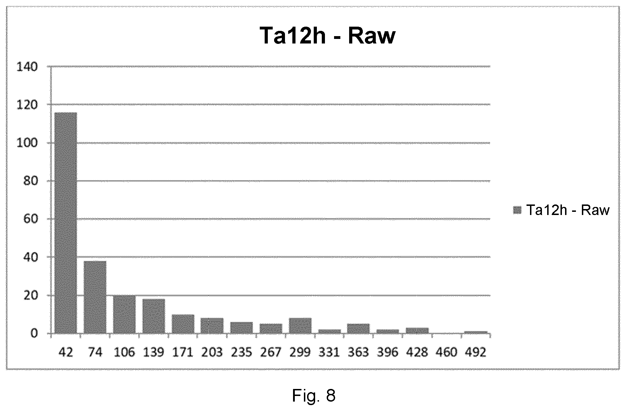

Figs. 4, 5, and 6 show the morphology of the particles of sample 1. Fig. 7 shows the identification, counting and measurement process from the TEM images of sample 1. The morphological analysis of sample 1 generated the results illustrated below in Table 8 and the histogram in Fig. 8.

**Table 8 - Particle analysis**

| | |
|---|---|
| **Minimum (nm)** | 10 |
| **Maximum (nm)** | 492 |
| **Average (nm)** | 89.5 |
| **Sample size (n)** | 242 |
| **Classes est.** | 15.6 |
| **Classes** | 15 |
| **Increase** | 32.1 |
| **Standard deviation** | 97.0 |
| **Increase 2** | |

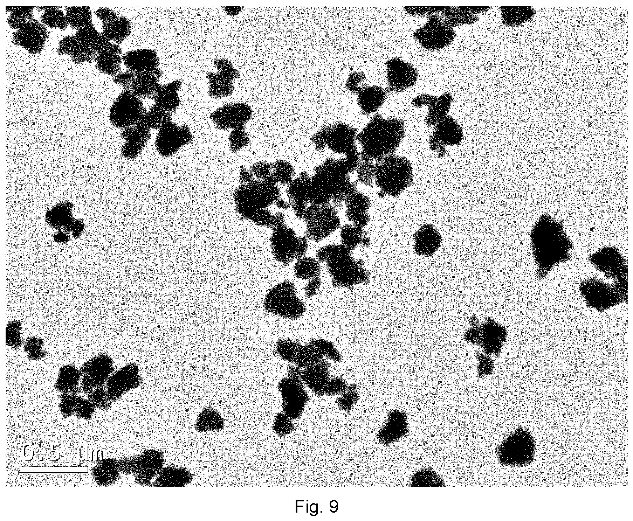

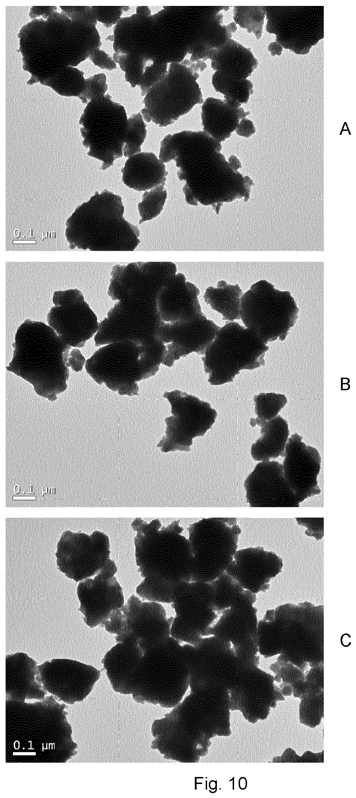

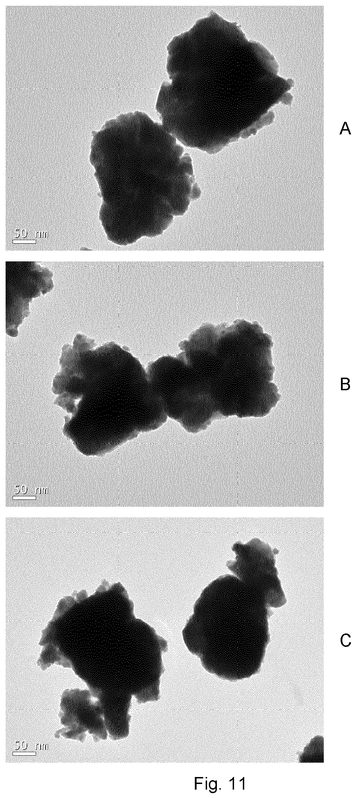

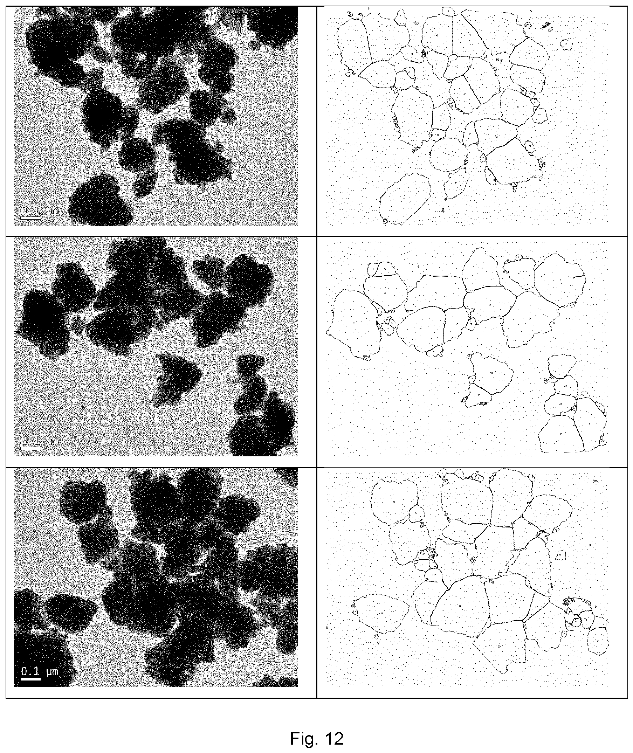

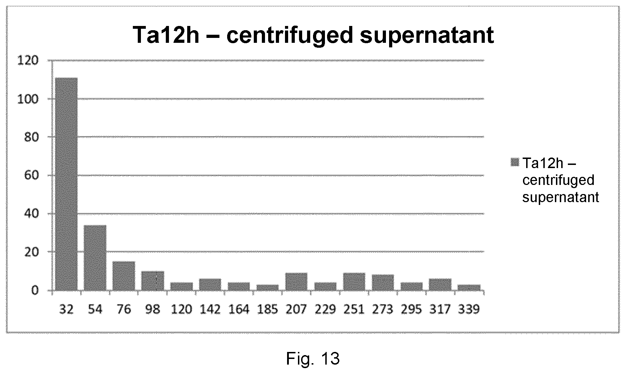

Figs. 9, 10 and 11 show the morphology of the particles of sample 2. Fig. 12 shows the identification, counting and measurement process from the TEM images of sample 2. The morphological analysis of sample 2 generated the results illustrated below in Table 9 and the histogram in Fig. 13.

**Table 9 - Particle analysis**

| | |
|---|---|
| **Minimum (nm)** | 10 |
| **Maximum (nm)** | 339 |
| **Average (nm)** | 79.44 |
| **Sample size (n)** | 230 |
| **Classes est.** | 15.17 |
| **Classes** | 15 |
| **Increase** | 21.93 |
| **Standard deviation** | 91.25 |
| **Increase 2** | |

Those skilled in the art will value the knowledge showed herein and will be able to reproduce the invention in the presented embodiments and in other variants and alternatives covered by the scope of the following claims.

## Claims

1. Tantalum nanoparticle preparation comprising a content equal to or greater than 95% by weight of tantalum particles, wherein 50% to 90% particles (d50 to d90) are in the particle granulometric range of 342 to 2127 nanometers (nm).

2. Nanoparticle preparation according to claim 1, wherein 90% to 99% particles (d90 to d99) are in the particle granulometric range of 1402 to 9938 nanometers (nm).

3. Nanoparticle preparation according to claim 1 or 2, wherein said particles have a size in the range of 10 to 492 nanometers (nm).

4. Nanoparticle preparation according to claim 3, wherein said particles have a size in the range of 10 to 339 nanometers (nm).

5. Nanoparticle preparation according to claim 1 or 2, wherein it comprises a content equal to or greater than 99% by weight of tantalum particles.

6. Nanoparticle preparation according to claim 1 or 2, wherein the nanoparticles are made of tantalum pentoxide.

7. Nanoparticle preparation according to claim 1 or 2 wherein the particle size distribution is: d10 between 83 and 97 nm; d50 between 342 and 455 nm; d90 between 1402 and 2127 nm; or d99 between 5755 and 9938 nm.

8. Nanoparticle preparation according to claim 1 or 2 wherein the specific particle surface area is: d10 between 7.54 and 8.82 m².g⁻¹; d50 between 1.61 and 2.14 m².g⁻¹; d90 between 0.34 and 0.52 m².g⁻¹; or d99 between 0.07 and 0.13 m².g⁻¹.

9. Process for obtaining tantalum nanoparticles, comprising the steps of:
- feeding tantalum particles to comminuting equipment selected from: high-energy mill, steam mill and jet mill;
- adjusting the comminution conditions selected from:
- in a high-energy mill:
- suspending particles to be comminuted in a liquid, in a concentration between 1 and 90% m/m, and stabilizing the suspension until obtaining a stable colloidal suspension; and
- placing said suspension and milling balls with a selected diameter between 5 µm and 1.3 mm in the milling chamber; adjusting the mill rotation speed between 500 and 4500 rpm; and mill the particles at temperatures below 60°C; or
- in a jet mill with superheated fluid or steam mill, feeding particles smaller than 40 micrometers; adjusting the air classifier rotation between 1,000 and 25,000 rpm; adjusting the compressed steam pressure between 10 and 100 bar and temperature between 230 and 360°C; or
- in a jet mill, adjusting the air classifier rotation between 1,000 and 25,000 rpm, adjusting the compressed air pressure between 1 and 50 bar and a temperature lower than 40 °C;
- comminuting the particles until the desired particle granulometric profile is obtained.

10. Process according to claim 9 wherein the stabilization of the colloidal suspension to be placed in the milling chamber of the high energy mill is selected from: adjusting the pH of the polar liquid medium to the range between 2 to 13, and optionally adding surfactants; or the addition of surfactants in a non-polar liquid medium.

11. Process according to claim 10, wherein the pH of the polar liquid medium is 6 to 10.

12. Process according to claim 9, wherein the high-energy mill is of the agitated media type and said spheres are composed of materials selected from: zirconia, silicon carbide, alumina, zirconia stabilized with yttria, zirconia stabilized with niobium pentoxide, or combinations thereof.

13. Process according to claim 9, wherein it further comprises a pre-comminution step of the tantalum particles before the feeding step to the comminution equipment wherein said pre-comminution is conducted until reaching an average particle size between 1 and 40 micrometers.

14. Process according to claim 13, wherein pre-comminution is performed in a ball mill, disc mill, high-energy mill, or jet mill.

15. Use of the tantalum nanoparticle preparation as defined in any one of claims 1 to 8, to obtain other particle or nanoparticle preparations with adjusted rheological properties, adjusted degrees of packing or void fractions, adjusted fluidity of the final preparation.

16. Use of the nanoparticle preparation as defined in any one of claims 1 to 8, for the preparation of: stable colloidal compositions; steels, metallic and non-metallic alloys, ceramics and/or polymers; composite materials, electronic components, battery cells, energy storage systems, piezoelectric sensors and actuators, solar panels; glass, glass-ceramic, transparent and translucent materials; catalysts.
